# EUROPÄISCHE PATENTSCHRIFT

(11) **EP 2 952 275 B1**
(45) Veröffentlichungstag und Bekanntmachung des Hinweises auf die Patenterteilung: **25.01.2017**
(21) Anmeldenummer: 14171134.1
(22) Anmeldetag: 04.06.2014
(51) Int. Cl.: B22F 3/105, B29C 47/08, B29B 7/48

(54) **Schneckenelement und Verfahren zur generativen Herstellung von Schneckenelementen**
Screw feed element and method for the additive manufacture of screw feed elements
Élément hélicoïdaux et procédé de fabrication additive d'éléments hélicoïdaux

(43) Veröffentlichungstag der Anmeldung: 09.12.2015
(73) Patentinhaber: Carl Aug. Picard GmbH, 42857 Remscheid (DE)
(72) Erfinder: Busenbecker, Michael, 42857 Remscheid (DE)
(74) Vertreter: Patent- und Rechtsanwälte Dr. Solf & Zapf

(56) Entgegenhaltungen:
- WO-A1-2004/055460
- WO-A1-2013/128463
- DE-A1- 10 013 474
- DE-A1-102008 029 304
- DE-B3-102007 048 385

## Beschreibung

Die Erfindung betrifft ein Verfahren zur Herstellung von Schneckenelementen, insbesondere für gleichsinnig drehende, dichtkämmende Doppelwellenextruder. Zudem betrifft die Erfindung ein Schneckenelement, insbesondere für gleichsinnig drehende, dichtkämmende Doppelwellenextruder, umfassend einen Schneckenkörper mit einer axial verlaufenden Durchgangsöffnung mit einer Innenverzahnung zum Aufstecken auf eine Tragwelle und mit einer Außenkontur zur Bereitstellung einer Extruderfunktion.

Derartige Schneckenelemente, siehe z.B. WO2013/128463, werden in unterschiedlichen Industrieanwendungen zum Beispiel als Teil von Doppelwellenextrudern eingesetzt, wobei ein Schwerpunkt in der Verarbeitung von Kunststoffen liegt. Die in den Doppelwellenextrudern verwendeten Schnecken sind modular aufgebaut und bestehen aus einer Tragwelle und den einzelnen Schneckenelementen. Die Geometrie der Schneckenelemente wird entsprechend der verfahrenstechnischen Aufgaben und Funktionen des Doppelwellenextruders ausgelegt und in definierter Konfiguration in axialer Richtung nebeneinander auf der Tragwelle montiert. Die Schneckenelemente werden in die Hauptgruppen Förderelemente, Knetelemente, Abstauelemente, Mischelemente und Sonderelemente unterteilt, die sich insbesondere in ihrer an die jeweilige Funktion angepasste Außengeometrie unterscheiden.
Die bisherige Herstellung der Schneckenelemente, unabhängig von Art, Größe und Funktion, erfolgt durch die Kombination klassischer Zerspanungsverfahren, wie Sägen, Drehen, Fräsen, Wirbeln und Schleifen für die Außengeometrie, siehe z.B. DE102008029304 A. Für die Montage auf die Tragwelle haben die Schneckenelemente je nach Maschinenhersteller und Baugröße unterschiedliche Innenprofile beziehungsweise Innenverzahnungen, welche die Kraftübertragung zwischen Tragwelle und Schneckenelement übernehmen. Diese Innenverzahnungen werden bei bekannten Schneckenelementen üblicherweise mittels formgebundener Fertigungsverfahren wie Nutenziehen, Räumen und/oder Erodieren hergestellt.

Als Werkstoffe für bekannte Schneckenelemente kommen Eisenlegierungen und Nichteisenlegierungen zur Anwendung, deren Auswahl sich nach Art der Verschleißbeanspruchung insbesondere durch Abrasion und/oder Korrosion ergibt. Dabei werden sowohl schmelz- und pulvermetallurgisch erzeugte Werkstoffe verwendet. Insbesondere werden Massivstähle oder HIP-Verbundstähle verwendet. Im HIP-Verbund werden Stähle bis HRC 66 verarbeitet. Diese werden mit einem weichen zylindrischen Innenkern aufgebaut, was jedoch zu kleineren Durchmessern hin sehr aufwendig ist und insbesondere bei Durchmessern kleiner 30 mm nicht mehr wirtschaftlich ist. Bei sehr kleinen Durchmessern kleiner 20 mm ist eine Herstellung im heißisostatischem Press (HIP)-Verbund technisch nicht mehr möglich, da insbesondere der weiche zylindrische Innenkern zu dünn wäre, um eine ausreichende Kraftübertragung durch das Innenprofil zu ermöglichen, und die Verarbeitung hochfester Kompaktmaterialien mit Verfahren wie zum Beispiel Räumen, Stoßen mit Schubkräften von mehr als 1200 N zur Einbringung der Innenprofile technisch nicht realisierbar sind. Derartige Materialien reißen und brechen aufgrund fehlender Zähigkeit.

Ein typischer Herstellungsprozess bekannter Schneckenelemente umfasste insbesondere die Schritte Sägen, HIP-Kern zentrieren, Vordrehen, Profilschleifen, Fräsen, Räumen der Innenverzahnung, Härten, Anlassen, Fertigschleifen, Sandstrahlen.

Nachteile der bekannten Schneckenelemente sind, dass ihr Herstellungsprozess aufwendig und kostenintensiv ist. Zudem sind bedingt durch die Verwendung der klassischen Zerspanungsverfahren und formgebundenen Fertigungsverfahren kleinere Durchmesser und bestimmte Außen- und Innengeometrien der Schneckenelemente bei Verwendung bestimmter Hartlegierungen nur sehr schwierig oder überhaupt nicht herstellbar.
Zudem ist durch die Verwendung der Hartlegierungen in Kombination mit den bisher verwendeten Herstellungsverfahren die Herstellung von Kühlkanälen innerhalb der Schneckenelemente sehr aufwendig und wenn überhaupt nur achsparallel möglich, so dass die Kühlung der Außenkontur nicht gleichmäßig erfolgt.

DE10013474 offenbart ein Verfahren zur Herstellung von thermisch und mechanisch hochbeanspruchten Bauteilen bzw. Maschinenelementen, wobei Ur-, Fertigungs- und Kernmodell des Bauteils bzw. Maschinenelements mittels eines Rapid-Prototyping-Verfahrens oder mittels Hochgeschwindigkeitsfräsen HSC gefertigt werden. Mittels des Verfahrens wird ein Bauteil bzw. Maschinenelement mit einem konturbezogenen Temperiersystem hergestellt. Die Bauteile bzw. Maschinenelemente sind typisch Extruder-Schneckenelemente für z.B. die kunststoffverarbeitende Industrie.

Aufgabe der Erfindung ist es, die oben beschriebenen Nachteile zu vermeiden und ein Herstellungsverfahren für Schneckenelemente, insbesondere mit kleinen Durchmessern, zur Verfügung zu stellen, das einfacher und kostengünstiger durchgeführt werden kann, und das mehr Flexibilität für die Gestaltung der Innenverzahnung, der Außenkontur und der Kühlung der Schneckenelemente zur Verfügung stellt.

Die Aufgabe wird dadurch gelöst, dass ein metallischer Pulverwerkstoff schrittweise in Schichten in Richtung einer Herstellungsachse auf einer Bauplattform übereinander angeordnet wird, wobei ein Laserstrahl für jede Schicht des Schneckenelementes den Pulverwerkstoff gemäß den Daten eines dreidimensionalen Modells in einer bestimmten Bestrahlungsreihenfolge an bestimmten Orten der Schicht bestrahlt, wobei hierdurch der Pulverwerkstoff partiell vollständig umgeschmolzen und mit der direkt unterliegenden Schicht stoffschlüssig verbunden wird, so dass nach Erstarrung der Schichten ein vollständiger stabiler Schneckenkörper gemäß dem dreidimensionalen Modell erzeugt wird. Durch ein derartiges Verfahren wird zur Herstellung der Schneckenelemente auf klassische Zerspanungsverfahren und formgebundene Fertigungsverfahren verzichtet. Dadurch können auf einfache Weise neue Geometrien für die Innenverzahnung und für die Außenkontur der Schneckenelemente hergestellt werden. Insbesondere erlaubt dies die Herstellung von Schneckenelementen, die vollständig aus Hartlegierungen bestehen. Dies ermöglicht eine kostengünstige Herstellung von

Schneckenelementen mit kleinen Durchmessern.

Bei einem derartigen Verfahren ist es besonders vorteilhaft, wenn die zu bestrahlenden Orte einer Schicht des Pulverwerkstoffs schachbrettartig in Parzellen aufgeteilt werden, wobei der Laserstrahl die Bestrahlung der verschiedenen Parzellen einer Schicht anhand einer zufälligen Bestrahlungsreihenfolge ausführt. Insbesondere werden die zu bestrahlenden Schichten in radial zur Herstellungsachse umlaufende Bestrahlungszonen aufgeteilt, wobei die Reihenfolge der Bestrahlung der Bestrahlungszonen radial von innen nach außen erfolgt. Dies ermöglicht eine bessere Verteilung der Wärmeenergie während des Herstellungsprozesses und verhindert eine unkontrollierte Aufheizung des Schneckenelementes während der Herstellung. Zudem verhindert dies Verschmelzungen bei besonders kleinen Strukturen, wie zum Beispiel bei der Innenverzahnung. Zudem verringert es das Risiko eines wärmebedingten Verzugs der Strukturen des Schneckenelementes während der Herstellungsphase.

Insbesondere werden in einer Ausführungsform des Verfahrens durch den Laserstrahl zusätzlich zu dem Schneckenelement in den Schichten Stützstrukturen erzeugt, so dass das herzustellende Schneckenelement in dem Pulverwerkstoff während der Herstellung, insbesondere an der Bauplattform, abgestützt wird. Dabei werden die Stützstrukturen vorteilhafterweise derart mit der Außenkontur und/oder der unteren Stirnseiten des Schneckenelementes verbunden, dass sie während des Schmelzvorgangs die erzeugte Wärmeenergie aus dem Schneckenelement herausleiten.

In vorteilhaften Ausführungsformen des Verfahrens umfasst der Pulverwerkstoff einen pulverförmigen hochfesten Schnellarbeitsstahl, insbesondere mit hohen Karbidanteilen (Chromkarbide, Vanadiumkarbide, Wolframkarbide), oder eine pulverförmige Kobalt-Chrom- oder Nickel-Chrom-Molybdän-Hartlegierung. Dies ermöglicht besonders harte und widerstandsfähige Außenkonturen der Schneckenelemente.

Zudem ist es Aufgabe der Erfindung, Schneckenelemente, insbesondere mit kleinen Durchmessern, zur Verfügung zu stellen, die möglichst einfach und kostengünstig herstellbar sind, die eine verbesserte Innenverzahnung, eine bessere Kühlung und verbesserte Außenkonturen aufweisen.

Die Aufgabe wird dadurch gelöst, dass ein Schneckenelement, insbesondere für gleichsinnig drehende, dichtkämmende Doppelwellenextruder, umfassend einen Schneckenkörper mit einer axial verlaufenden Durchgangsöffnung mit einer Innenverzahnung zum Aufstecken auf eine Tragwelle und mit einer Außenkontur zur Bereitstellung einer Extruderfunktion, nach dem oben beschriebenen erfindungsgemäßen Verfahren hergestellt ist.

In einer besonders vorteilhaften Ausführungsform ist in dem Schneckenkörper mindestens ein axial verlaufender innenliegender Kühlkanal angeordnet, der in einem gleichmäßigen radialen Abstand zu einer Oberfläche der Außenkontur oder zu einer Oberfläche der Innenverzahnung verläuft und dem Verlauf der Oberfläche folgt. Dies ermöglicht eine optimale Kühlung der Innenverzahnung und/oder der Außenkontur, wodurch insbesondere eine bessere Lebensdauer erreicht wird.

In einer weiteren Ausführungsform ist die Innenverzahnung als Evolventenverzahnung ausgebildet. Insbesondere ist die Innenverzahnung derart ausgebildet, dass eine Kraftübertragung von größer/gleich 1200 N/mm² zwischen dem Schneckenkörper und der Tragwelle erreichbar ist. Dies ermöglicht eine bessere Kraftverteilung an der Innenverzahnung, wodurch höhere Kräfte übertragen und/oder härtere Materialien verwendet werden können.

Weitere vorteilhafte Ausgestaltungen der Erfindung ergeben sich aus der folgenden Figurenbeschreibung, der Zeichnung und den Unteransprüchen.

Es zeigen:
- Fig. 1a: eine dreidimensionale Ansicht eines erfindungsgemäßen Schneckenelementes,
- Fig. 1b: eine Draufsicht auf eine Stirnseite des erfindungsgemäßen Schneckenelementes gemäß Fig. 2a,
- Fig. 2: eine Skizze eines erfindungsgemäßen Verfahrens zur Herstellung von Schneckenelementen,
- Fig. 3: eine Schnittansicht des erfindungsgemäßen Schneckenelementes in 90° - Anordnung mit Stützstrukturen,
- Fig. 4: eine Schnittansicht des erfindungsgemäßen Schneckenelementes in 45° - Anordnung mit Stützstrukturen,
- Fig. 5: Zeit-Temperatur-Umwandlungsschaubild für den Werkstoff 1.3242.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

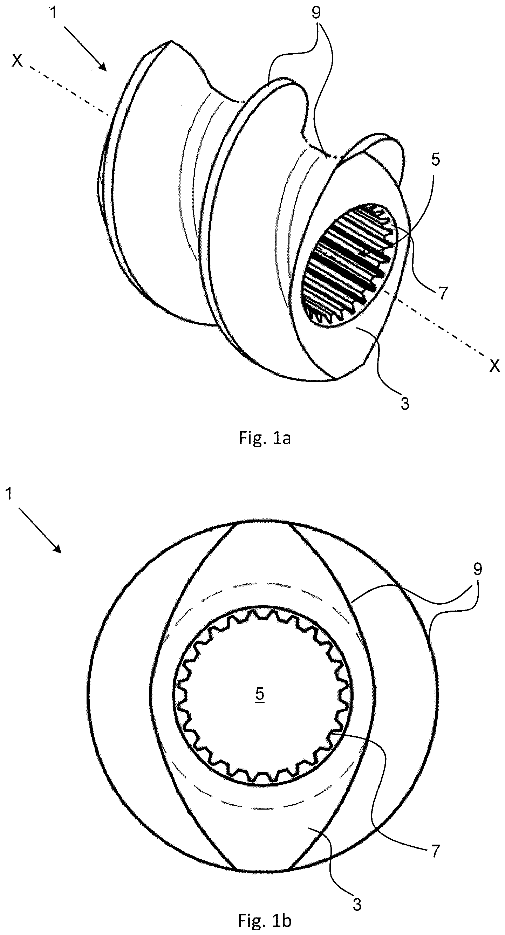

Fig. 1 a und 1 b zeigen eine Ausführungsform eines erfindungsgemäßen Schneckenelementes 1. Das Schneckenelement 1 ist insbesondere für einen nicht dargestellten, gleichsinnig drehenden, dichtkämmenden Doppelwellenextruder ausgebildet. Das Schneckenelement 1 umfasst einen Schneckenkörper 3 mit einer axial verlaufenden Durchgangsöffnung 5, mit einer Innenverzahnung 7 zum Aufstecken auf eine Tragwelle, und mit einer Außenkontur 9 zur Bereitstellung einer Extruderfunktion. Zur Verwendung mit einem derartigen Doppelwellenextruder wird das Schneckenelement 1 zusammen mit anderen Schneckenelementen axial auf die nicht dargestellte Tragwelle des Doppelwellenextruders entlang der Achse X-X des Schneckenelementes 1 aufgeschoben.

Die Innenverzahnung 7 der Durchgangsöffnung 5 ist vorteilhafterweise als Evolventenverzahnung (insbesondere gemäß DIN 5480 von 2006 oder alternativ ISO 4156 von 2005) ausgebildet. Dies ermöglicht eine höhere Kraftübertragung auf die Tragwelle. Insbesondere ist die Innenverzahnung 7 derart ausgebildet ist, dass eine Kraftübertragung von größer/gleich 1200 N/mm2 zwischen Schneckenkörper 3 und der Tragwelle erreichbar ist. Die Profilabweichung der Innenverzahnung 7 beträgt vorteilhafterweise insbesondere ± 0,01 mm.

Der Außendurchmesser des Schneckenkörpers 3, insbesondere der maximale Außendurchmesser der Außenkontur 9, ist kleiner/gleich 58 mm, vorzugsweise kleiner/gleich 30 mm. Der minimale Außendurchmesser ist insbesondere 12 mm. Die maximale Abweichung des Konturenabstandes, d. h. der Abstand der Oberfläche der Außenkontur 9 von der Innenwand der Durchgangsöffnung 5 beträgt insbesondere ± 0,05 mm.

Der Schneckenkörper 3 besteht vorteilhafterweise aus einem Einkomponenten-Werkstoff. Der Einkomponenten-Werkstoff ist insbesondere ein hochfester Schnellarbeitsstahl, insbesondere mit hohen Karbidanteilen (Chromkarbide, Vanadiumkarbide, Wolframkarbide) oder eine Kobalt-Chrom- oder Nickel-Chrom-Molybdän-Hartlegierung. Die Oberflächenhärte des Schneckenkörpers 3 liegt in einem Bereich von HRC 40 bis HRC 70, vorzugsweise von HRC 56 bis HRC 70 (gemäß dem Härteprüfverfahren nach Rockwell, Typ HRC). Dadurch wird während des Extruderprozesses insbesondere eine höhere Abrasionsbeständigkeit gegen harte Füllstoffe und Verstärkungsmittel wie Glasfasern, Graphitfasern, Talkum, etc. und eine höhere Korrosionsbeständigkeit gegen Wasser und Säuren wie HCL, HNO₃, HSO₃CL, etc. erreicht.

In einer nicht dargestellten vorteilhaften Ausführungsform eines erfindungsgemäßen Schneckenelementes 1 ist in dem Schneckenkörper 3 mindestens ein axial verlaufender innenliegender Kühlkanal angeordnet, der insbesondere in einem gleichmäßigen radialen Abstand zu einer Oberfläche der Außenkontur 9 oder zu einer Oberfläche der Innenverzahnung 7 verläuft und dem Verlauf der Oberfläche folgt. Die Dichtigkeit der Kühlung liegt insbesondere in einem Temperaturbereich von 20 °C bis 350°C.

Vorteilhafterweise ist die Außenkontur 9 derart ausgebildet, dass die Oberfläche der Außenkontur 9 entlang der axialen Erstreckung überall beziehungsweise zumindest annähernd überall den gleichen Abstand zu einer Oberfläche eines parallel angeordneten Schneckenelementes 1 mit identischer Außenkontur 9 aufweist.

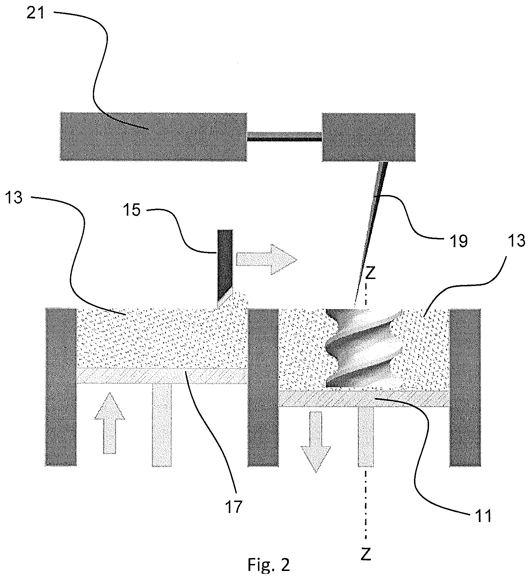

Erfindungsgemäße Schneckenelemente 1 werden nach dem folgenden erfindungsgemäßen Verfahren gemäß Fig. 2 in Form eines generativen Schichtbauverfahrens mittels einer Bauplattform 11 hergestellt. Bei dem Verfahren wird ein metallischer Pulverwerkstoff 13 schrittweise in Schichten in Richtung einer Herstellungsachse Z-Z übereinander angeordnet. Dazu wird in der Regel der Pulverwerkstoff 13 mittels einer Rakel 15 oder einer Walze vollflächig auf die Bauplattform 11 aufgebracht. Der Pulverwerkstoff 13 wird bei jedem Schritt durch Anheben einer Pulverplattform 17 als Vorratsbehälter zur Verfügung gestellt und mittels Rakel 15 auf die Bauplattform 11 befördert.

Ein Laserstrahl 19 eines Lasers 21 bestrahlt für jede Schicht des Schneckenelementes 1 den Pulverwerkstoff 13 gemäß den Daten eines dreidimensionalen Modells in einer bestimmten Bestrahlungsreihenfolge und an bestimmten Orten der Schicht. Dadurch wird der Pulverwerkstoff 13 partiell vollständig aufgeschmolzen beziehungsweise umgeschmolzen und mit der direkt unterliegenden Schicht stoffschlüssig verbunden. Dabei wird die Energie, die vom Laserstrahl 19 zugeführt wird, vom Pulverwerkstoff 13 absorbiert und führt zu einem lokal begrenzten Sintern oder Verschmelzen von Partikeln unter Reduktion der Gesamtoberfläche. Die Bauplattform 11 wird schrittweise geringfügig abgesenkt, um die nächste Schicht im nächsten Schritt zu erzeugen. Nach Erstarrung aller Schichten ist ein vollständiger stabiler Schneckenkörper 3 gemäß dem dreidimensionalen Modell erzeugt worden. Die Bearbeitung erfolgt Schicht für Schicht in vertikaler Richtung, wodurch auch hinterschnittene Konturen erzeugt werden können.

In einer bevorzugten Ausführungsform des Verfahrens werden die zu bestrahlenden Orte einer Schicht des Pulverwerkstoffs 13 schachbrettartig in Parzellen aufgeteilt, wobei der Laserstrahl 19 die Bestrahlung für die verschiedenen Parzellen einer Schicht anhand einer zufälligen Bestrahlungsreihenfolge ausführt. Insbesondere werden die zu bestrahlenden Schichten in radial zur Herstellungsachse Z-Z umlaufende Bestrahlungszonen aufgeteilt, wobei die Reihenfolge der Bestrahlung der Bestrahlungszonen radial von innen nach außen erfolgt. Dies ermöglicht eine bessere Kontrolle der Wärmeentwicklung im Schneckenkörper 3 während des Herstellungsprozesses.

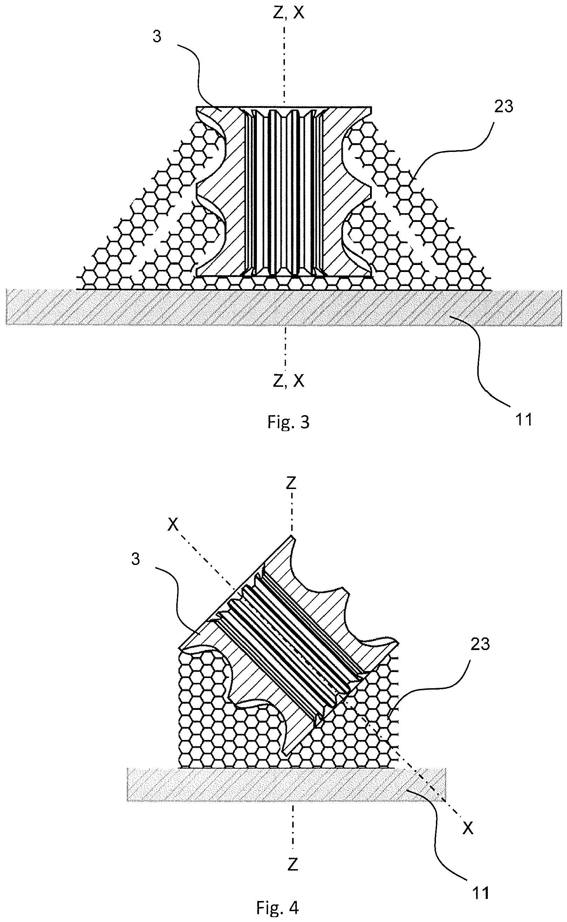

Zudem werden in einer weiteren vorteilhaften Ausführungsform des erfindungsgemäßen Verfahrens durch den Laserstrahl 19 zusätzlich zu dem Schneckenelement 1 in den Schichten Stützstrukturen 23 geschmolzen, so dass das herzustellende Schneckenelement 1 in dem Pulverwerkstoff 13 während der Herstellung abgestützt wird. Vorteilhafterweise werden die Stützstrukturen 23 mit der Außenkontur 9 und/oder der der Bauplattform 11 zugewandten Stirnseite des Schneckenelementes 1 verbunden, so dass die Stützstrukturen 23 während des Schmelzvorgangs die erzeugte Wärmeenergie aus dem Schneckenelement 1 herausleiten. Die Stützstrukturen 23 verlaufen insbesondere zunächst in einem ersten Abschnitt von der Außenkontur 9 parallel zur Bauplattform radial weg vom Schneckenkörper 3 und danach in einem zweiten Abschnitt parallel zur Herstellungsachse Z-Z bis zur Bauplattform 11. Die Stützstrukturen 23 sind insbesondere wabenförmig ausgebildet. In einer Ausführungsform gemäß Fig. 3 wird der Schneckenkörper 3 in einer Anordnung hergestellt, so dass die Achse X-X des Schneckenelementes 1 parallel zur Herstellungsachse Z-Z ist. In einer zweiten Ausführungsform gemäß Fig. 4 wird der Schneckenkörper 3 in einer Anordnung hergestellt, so dass die Achse X-X des Schneckenelementes 1 einen 45° Winkel mit der Herstellungsachse Z-Z einschließt. Prinzipiell sind auch andere Winkel denkbar, je nach benötigter Wärmeabführung. Dadurch wird eine gute thermische Anbindung an die Bauplattform 11 und damit eine effektive Abführung der Wärme nach der Aufschmelzung ermöglicht. Dies verhindert insbesondere einen wärmebedingten Verzug des Werkstoffs während der Abkühlphase. Dies ist insbesondere für die Innenverzahnung wichtig, um eine gute Kraftübertragung zu gewährleisten.

Der Pulverwerkstoff 13 umfasst bevorzugt einen pulverförmigen hochfesten Schnellarbeitsstahl, insbesondere mit hohen Karbidanteilen (Chromkarbide, Vanadiumkarbide, Wolframkarbide) oder eine pulverförmige Kobalt-Chrom- oder Nickel-Chrom-Molybdän-Hartlegierung. Die Schichtdicke der einzelnen Schichten beträgt insbesondere zwischen 20 µm und 100 µm.

Bei einer vorteilhaften Ausgestaltung des erfindungsgemäßen Verfahrens sind die Laserenergie und die Lasereinschaltzeit des Laserstrahls 19 derart auf den Pulverwerkstoff 13 und die Schichtdicke eingestellt, dass der Pulverwerkstoff 13 im umgeschmolzenen Zustand direkt aus dem Herstellungsprozess des Schneckenkörpers 3 gehärtet wird. Die Härtung erfolgt dabei gemäß DIN 17022 vom Oktober 1994. Hierzu sind die Laserparameter für das Umschmelzen des Pulverwerkstoffs 13 so zu wählen, dass die entstandene Prozesswärme im Bauteil über das Pulverbett beziehungsweise die Stützkonstruktion aus den Stützstrukturen 23 mit für den verwendeten Pulverwerkstoff 13 ausreichender Abschreckgeschwindigkeit abgeführt wird. Die benötigte Abschreckgeschwindigkeit ist dem Zeit-Temperatur-Umwandlungsschaubild für den jeweilig verwendeten Pulverwerkstoff 13 zu entnehmen.

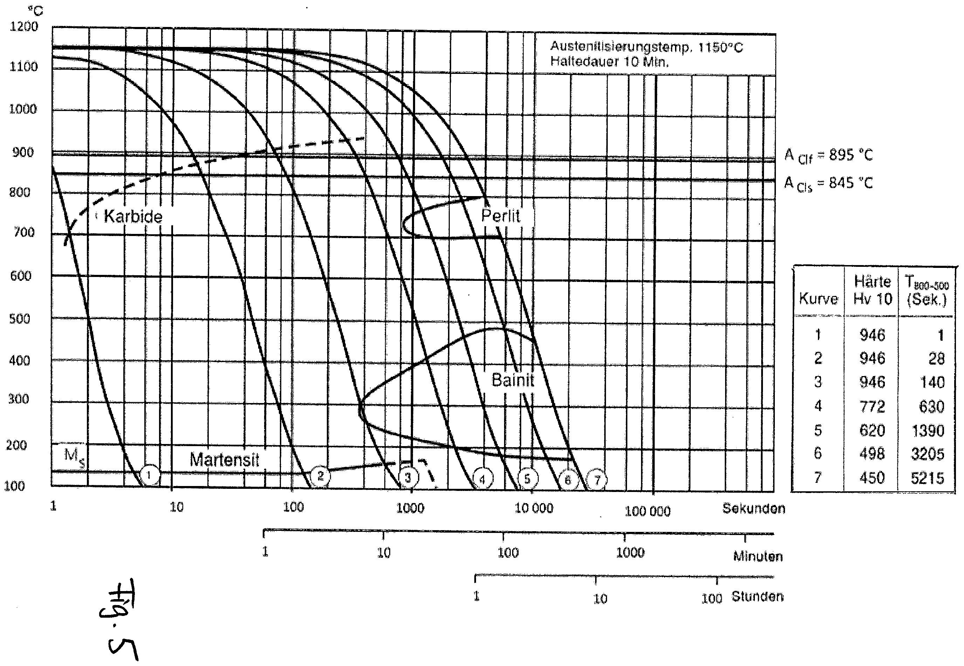

Fig. 5 zeigt als Beispiel das Zeit-Temperatur-Umwandlungsschaubild für den Werkstoff 1.3242 bei kontinuierlicher Kühlung, einer Austenitisierungstemperatur von 1150 °C und einer Haltedauer von 10 Minuten. Dabei werden die Laserparameter und die Stützstrukturen 23 erfindungsgemäß derart aneinander angepasst, dass eine oberflächliche beziehungsweise randzonenbeeinflussende oder durchgreifende Härtesteigerung bis auf einen Härtegrad in einem Bereich von HRC 40 bis HRC 70, insbesondere von HRC 56 bis HRC 70, im Schneckenkörper 3 erzielt wird. Die Härtesteigerung soll dabei nur durch Gefügeumwandlung ohne Veränderung der chemischen Zusammensetzung erfolgen. Dadurch wird ein zusätzlicher Prozessschritt der Härtung durch eine zusätzliche Wärmebehandlung des Schneckenelementes 1 eingespart.

Die Erfindung ist nicht auf die dargestellten und beschriebenen Ausführungsbeispiele beschränkt, sondern umfasst auch alle im Sinne der Erfindung gleichwirkenden Ausführungen. Es wird ausdrücklich betont, dass die Ausführungsbeispiele nicht auf alle Merkmale in Kombination beschränkt sind, vielmehr kann jedes einzelne Teilmerkmal auch losgelöst von allen anderen Teilmerkmalen für sich eine erfinderische Bedeutung haben. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmale definiert sind. Dies bedeutet, dass grundsätzlich praktisch jedes Einzelmerkmal des Anspruchs 1 weggelassen bzw. durch mindestens ein an anderer Stelle der Anmeldung offenbartes Einzelmerkmal ersetzt werden kann.

## Patentansprüche

1. Verfahren zur Herstellung von Schneckenelementen (1), mit einem Schneckenkörper (3) mit einer axial verlaufenden Durchgangsöffnung (5) mit einer Innenverzahnung (7) zum Aufstecken auf eine Tragwelle und mit einer Außenkontur (9) zur Bereitstellung einer Extruderfunktion, insbesondere für gleichsinnig drehende, dichtkämmende Doppelwellenextruder,
**dadurch gekennzeichnet, dass**
ein metallischer Pulverwerkstoff (13) schrittweise in Schichten in Richtung einer Herstellungsachse (Z-Z) auf einer Bauplattform (11) übereinander angeordnet wird, wobei ein Laserstrahl (19) für jede Schicht des Schneckenelementes (1) den Pulverwerkstoff (13) gemäß den Daten eines dreidimensionalen Modells in einer bestimmten Bestrahlungsreihenfolge an bestimmten Orten der Schicht bestrahlt, wobei hierdurch der Pulverwerkstoff (13) partiell vollständig umgeschmolzen und mit der direkt unterliegenden Schicht stoffschlüssig verbunden wird, so dass nach Erstarrung der Schichten ein vollständiger stabiler Schneckenkörper (3) gemäß dem dreidimensionalen Modell erzeugt wird.

2. Verfahren nach Anspruch 1,
**dadurch gekennzeichnet, dass**
die zu bestrahlenden Orte einer Schicht des Pulverwerkstoffs (13) schachbrettartig in Parzellen aufgeteilt werden, wobei der Laserstrahl (19) die Bestrahlung der verschiedenen Parzellen einer Schicht anhand einer zufälligen Bestrahlungsreihenfolge ausführt.

3. Verfahren nach Anspruch 1 oder 2,
**dadurch gekennzeichnet, dass**
die zu bestrahlenden Schichten in radial zur Herstellungsachse (Z-Z) umlaufende Bestrahlungszonen aufgeteilt werden, wobei die Reihenfolge der Bestrahlung der Bestrahlungszonen radial von innen nach außen erfolgt.

4. Verfahren nach einem der Ansprüche 1 bis 3,
**dadurch gekennzeichnet, dass**
der Pulverwerkstoff (13) einen pulverförmigen hochfesten Schnellarbeitsstahl oder eine pulverförmige Kobalt-Chrom- oder Nickel-Chrom-Molybdän-Hartlegierung umfasst.

5. Verfahren nach einem der Ansprüche 1 bis 4,
**dadurch gekennzeichnet, dass**
die Schichtdicke der einzelnen Schichten zwischen 20 µm und 100 µm beträgt.

6. Verfahren nach einem der Ansprüche 1 bis 5,
**dadurch gekennzeichnet, dass**
durch den Laserstrahl (19) zusätzlich zu dem Schneckenelement (1) in den Schichten Stützstrukturen (23) erzeugt werden, so dass das herzustellende Schneckenelement (1) in dem Pulverwerkstoff (13) während der Herstellung abgestützt wird.

7. Verfahren nach Anspruch 6,
**dadurch gekennzeichnet, dass**
die Stützstrukturen (23) derart mit der Außenkontur (9) und/oder der der Bauplattform (11) zugewandten Stirnseite des Schneckenelementes (1) verbunden werden, dass sie während des Schmelzvorgangs die erzeugte Wärmeenergie aus dem Schneckenelement (1) herausleiten.

8. Verfahren nach einem der Ansprüche 1 bis 7,
**dadurch gekennzeichnet, dass**
die Prozesstemperatur für das Laserumschmelzen und die Stützstrukturen (23) so ausgelegt sind, dass die beim Umschmelzen erzeugte Wärme für den verwendeten Pulverwerkstoff (13) ausreichend schnell abgeführt wird, und eine Härtesteigerung bis auf einen Härtegrad in einem Bereich von HRC 40 bis HRC 70, insbesondere von HRC 56 bis HRC 70, oberflächlich oder durchgreifend erzielt wird.

9. Schneckenelement (1), insbesondere für gleichsinnig drehende, dichtkämmende Doppelwellenextruder, umfassend einen Schneckenkörper (3) mit einer axial verlaufenden Durchgangsöffnung (5) mit einer Innenverzahnung (7) zum Aufstecken auf eine Tragwelle und mit einer Außenkontur (9) zur Bereitstellung einer Extruderfunktion, hergestellt nach einem der Ansprüche 1 bis 8.

10. Schneckenelement (1) nach Anspruch 9,
**dadurch gekennzeichnet, dass**
in dem Schneckenkörper (3) mindestens ein axial verlaufender innenliegender Kühlkanal angeordnet ist, der in einem gleichmäßigen radialen Abstand zu einer Oberfläche der Außenkontur (9) oder zu einer Oberfläche der Innenverzahnung (7) verläuft und dem Verlauf der Oberfläche folgt.

11. Schneckenelement (1) nach Anspruch 9 oder 10,
**dadurch gekennzeichnet, dass**
die Innenverzahnung (7) als Evolventenverzahnung ausgebildet ist.

12. Schneckenelement (1) nach einem der Ansprüche 9 bis 11,
**dadurch gekennzeichnet, dass**
die Außenkontur (9) derart ausgebildet ist, dass die Oberfläche der Außenkontur (9) entlang der axialen Erstreckung überall den gleichen Abstand zu einer Oberfläche eines parallel angeordneten Schneckenelementes (1) mit identischer Außenkontur (9) aufweist.

13. Schneckenelement (1) nach einem der Ansprüche 1 bis 12,
**dadurch gekennzeichnet, dass**
die Innenverzahnung (7) derart ausgebildet ist, dass eine Kraftübertragung von größer/gleich 1200 N/mm² zwischen dem Schneckenkörper (3) und der Tragwelle erreichbar ist.

14. Schneckenelement (1) nach einem der Ansprüche 1 bis 13,
**dadurch gekennzeichnet, dass**
der Außendurchmesser des Schneckenkörpers (3) kleiner/gleich 58 mm, vorzugsweise kleiner/gleich 30 mm ist.

15. Schneckenelement (1) nach einem der Ansprüche 1 bis 14,
**dadurch gekennzeichnet, dass**
die Oberflächenhärte des Schneckenkörpers (3) in einem Bereich von HRC 40 bis HRC 70, vorzugsweise von HRC 56 bis HRC 70 liegt.

## Claims

1. Method for production of screw elements (1) with a screw body (3) with an axially running through-opening (5) with an internal gearing (7) for mounting on a support shaft and with an outer contour (9) for provision of an extruder function, in particular for closely meshing twin-shaft extruders rotating in the same direction,
**characterized in that**
a metallic powder material (13) is arranged step by step in layers in the direction of a production axis (Z-Z) on a work platform (11) one over the another, wherein a laser beam (19) for each layer of the screw element (1) irradiates the powder material (13) according to the data of a three-dimensional model in a specific irradiation sequence at specific sites of the layer, wherein in this way the powder material (13) is re-melted completely in places, and is bonded with the directly underlying layer such that after hardening of the layers, a complete, stable screw body (3) is produced according to the three-dimensional model.

2. Method according to Claim 1,
**characterized in that**
the irradiated sites of a layer of the powder material (13) are divided into plots in a grid pattern, wherein the laser beam (19) irradiates the different plots of a layer according to a random irradiation sequence.

3. Method according to Claim I or 2,
**characterized in that**
the layers to be irradiated are divided into irradiation zones radial to the production axis (Z-Z), wherein the sequence of irradiation of the irradiation zones is radial from the inside out.

4. Method according to one of Claims 1 to 3,
**characterized in that**
the powder material (13) comprises a powder-like high-strength high-speed steel or a powder-like cobalt-chromium or nickel-chromium-molybdenum hard alloy.

5. Method according to one of Claims 1 to 4,
**characterized in that that**
the layer thickness of the individual layers is between 20 µm and 100 µm.

6. Method according to one of Claims 1 to 5,
**characterized in that**
the laser beam (19) in addition to the screw element (1), creates support structures (23) in the layers, so that the screw element (1) to be produced is supported in the powder material (13) during production.

7. Method according to Claim 6,
**characterized in that**
the support structures (23) are connected to the outer contour (9) and/or to the face of the screw element (1), which face is turned toward the work platform, such that during the melting process, they conduct the heat energy that is produced away from the screw element (1).

8. Method according to one of Claims 1 to 7,
**characterized in that**
the process temperature for laser re-melting and the support structures (23) are configured such that the heat produced during re-melting for the powder material (13) used is removed sufficiently rapidly, and an increase in hardness is achieved up to a hardness level in a range of HRC 40 to HRC 70, in particular HRC 56 to HRC 70, superficially or generally.

9. Screw element (1), in particular for closely meshing twin-shaft extruders rotating in the same direction, comprising a screw body (3) with an axially running through-opening (5) with an internal gearing (7) for mounting on a support shaft and with an outer contour (9) for providing an extruder function, produced in accordance with one of Claims 1 to 8.

10. Screw element (1) according to Claim 9,
**characterized in that**
in the screw body (3), at least one axially running inner cooling channel is arranged, which runs with a uniform axial separation with respect to a surface of the outer contour (9) or to a surface of the internal gearing (7), and follows the course of the surface.

11. Screw element (1) according to Claim 9 or 10,
**characterized in that**
the internal gearing (7) is configured as an involute gearing.

12. Screw element (1) according to one of Claims 9 to 11,
**characterized in that**
the outer contour (9) is configured such that the surface of the outer contour (9) everywhere along the axial extent has the same separation from the surface of a screw element (1) arranged in parallel with the identical outer contour (9).

13. Screw element (1) according to one of Claims 1 to 12,
**characterized in that**
the internal gearing (7) is configured such that a force transmission greater than or equal to 1200 N/mm² may be achieved between the screw body (3) and the support shaft.

14. Screw element (1) according to one of Claims 1 to 13,
**characterized in that**
the outer diameter of the screw body (3) is less than or equal to 58 mm, preferably less than or equal to 30 mm.

15. Screw element (1) according to one of Claims 1 to 14,
**characterized in that**
the surface hardness of the screw body (3) lies in a range of HRC 40 to HRC 70, preferably from HRC 56 to HRC 70.

## Revendications

1. Procédé de fabrication d'éléments hélicoïdaux (1), avec un corps hélicoïdal (3) présentant une ouverture de passage s'étendant axialement (5) dotée d'une denture intérieure (7) à engager sur un arbre porteur et avec un contour extérieur (9) destiné à fournir une fonction d'extrudeuse, en particulier pour une extrudeuse à double vis à entrecroisement serré tournant dans le même sens, **caractérisé en ce que** l'on dispose un matériau métallique pulvérulent (13) pas à pas en couches l'une au-dessus de l'autre dans la direction d'un axe de fabrication (Z-Z) sur une plate-forme de construction (11), dans lequel un faisceau laser (19) irradie pour chaque couche de l'élément hélicoïdal (1) le matériau pulvérulent (13) selon les données d'un modèle tridimensionnel selon une séquence d'irradiation déterminée en des endroits déterminés de la couche, dans lequel le matériau pulvérulent (13) est de ce fait en partie entièrement fondu et est assemblé en une liaison matérielle à la couche directement sous-jacente, de telle manière qu'après la solidification des couches on produise un corps hélicoïdal complet stable (3) selon le modèle tridimensionnel.

2. Procédé selon la revendication 1, **caractérisé en ce que** les endroits à irradier d'une couche du matériau pulvérulent (13) sont divisés en parcelles en forme de damier, dans lequel le faisceau laser (19) exécute l'irradiation des différentes parcelles d'une couche à l'aide d'une séquence d'irradiation aléatoire.

3. Procédé selon la revendication 1 ou 2, **caractérisé en ce que** les couches à irradier sont divisées en zones d'irradiation circonscrites radialement par rapport à l'axe de fabrication (Z-Z), dans lequel la séquence de l'irradiation des zones d'irradiation est exécutée radialement de l'intérieur vers l'extérieur.

4. Procédé selon l'une quelconque des revendications 1 à 3, **caractérisé en ce que** le matériau pulvérulent (13) comprend un acier à coupe rapide à haute résistance en poudre ou un alliage dur cobalt-chrome ou nickel-chrome-molybdène en poudre.

5. Procédé selon l'une quelconque des revendications 1 à 4, **caractérisé en ce que** l'épaisseur de couche des couches individuelles vaut entre 20 µm et 100 µm.

6. Procédé selon l'une quelconque des revendications 1 à 5, **caractérisé en ce que** l'on produit avec le faisceau laser (19) en plus de l'élément hélicoïdal (1) des structures de soutien (23) dans les couches, de telle manière que l'élément hélicoïdal à fabriquer (1) soit soutenu dans le matériau pulvérulent (13) pendant la fabrication.

7. Procédé selon la revendication 6, **caractérisé en ce que** les structures de soutien (23) sont reliées au contour extérieur (9) et/ou au côté frontal tourné vers la plate-forme de construction (11) de l'élément hélicoïdal (1), de telle manière qu'elles évacuent hors de l'élément hélicoïdal (1) pendant l'opération de fusion l'énergie thermique produite.

8. Procédé selon l'une quelconque des revendications 1 à 7, **caractérisé en ce que** la température de traitement pour la fusion au laser et les structures de soutien (23) sont conçues de telle manière que la chaleur produite pendant la fusion pour le matériau pulvérulent utilisé (13) soit évacuée suffisamment rapidement et que l'on obtienne une augmentation de la dureté, en surface ou à coeur, jusqu'à un degré de dureté dans la plage de HRC 40 à HRC 70, en particulier de HRC 56 à HRC 70.

9. Elément hélicoïdal (1), en particulier pour une extrudeuse à double vis à entrecroisement serré tournant dans le même sens, comprenant un corps hélicoïdal (3) avec une ouverture de passage s'étendant axialement (5) dotée d'une denture intérieure (7) à engager sur un arbre porteur et avec un contour extérieur (9) destiné à fournir une fonction d'extrudeuse, fabriqué selon l'une quelconque des revendications 1 à 8.

10. Elément hélicoïdal (1) selon la revendication 9, **caractérisé en ce qu'**au moins un canal de refroidissement intérieur s'étendant axialement est disposé dans le corps hélicoïdal (3), et se trouve à une distance radiale uniforme d'une surface du contour extérieur (9) ou d'une surface de la denture intérieure (7) et qui suit le tracé de la surface.

11. Elément hélicoïdal (1) selon la revendication 9 ou 10, **caractérisé en ce que** la denture intérieure (7) est réalisée sous forme de denture à développante.

12. Elément hélicoïdal (1) selon l'une quelconque des revendications 9 à 11, **caractérisé en ce que** le contour extérieur (9) est réalisé de telle manière que la surface du contour extérieur (9) présente le long de l'extension axiale partout la même distance d'une surface d'un élément hélicoïdal (1) disposé parallèlement ayant un contour extérieur identique (9).

13. Elément hélicoïdal (1) selon l'une quelconque des revendications 1 à 12, **caractérisé en ce que** la denture intérieure (7) est réalisée de telle manière qu'une transmission de force supérieure ou égale à 1200 N/mm² entre le corps hélicoïdal (3) et l'arbre porteur puisse être atteinte.

14. Elément hélicoïdal (1) selon l'une quelconque des revendications 1 à 13, **caractérisé en ce que** le diamètre extérieur du corps hélicoïdal (3) est inférieur ou égal à 58 mm, de préférence inférieur ou égal à 30 mm.

15. Elément hélicoïdal (1) selon l'une quelconque des revendications 1 à 14, **caractérisé en ce que** la dureté superficielle du corps hélicoïdal (3) se situe dans une plage de HRC 40 à HRC 70, de préférence de HRC 56 à HRC 70.
